# EUROPÄISCHE PATENTANMELDUNG

(11) **EP 2 813 630 A2**
(43) Veröffentlichungstag der Anmeldung: **17.12.2014**
(21) Anmeldenummer: 14001894.6
(22) Anmeldetag: 29.05.2014
(51) Int. Cl.: E04B 1/86

(54) **Beleuchteter Akustikabsorber**

(30) Priorität: 29.05.2013 CH CH
(71) Anmelder: Sonami AG, 9490 Vaduz (LI)
(72) Erfinder: Lathan, Daniel, 9490 Vaduz (LI)

(57) **Zusammenfassung**

Eine Schalldämmplatte (1) zur Dämpfung des Hörschalls im Innenraumbereich mit einem Formkörper (2a) aus Schaumstoff weist an den Seitenflächen (3) und an der Rückseite (4) des Formkörpers (2a) elektrisch gespeiste Leuchtmittel (5a, 5b, 5c) derart angeordnet auf, dass deren Licht den lichtdurchlässigen Formkörper (2a) durchflutet und an der Vorderseite (6) austritt.

## Beschreibung

Die Erfindung betrifft eine Schalldämmplatte aus Schaumstoff zur Dämpfung des Hörschalls im Innenraumbereich, insbesondere zur zumindest teilweisen Verkleidung von Decken, Raumteilern oder Wänden.

Eine nach CH689525A vorbekannte Schalldämmplatte ist üblicherweise als zusammenhängend geschäumter Formkörper in der Form einer flachen, zwischen 1 cm und 10 cm dicken, prismatischen Platte mit Seitenlängen, der meist quadratischen Grundfläche, zwischen 40 cm und 2 m ausgebildet, wobei zur Dämpfung tiefer Frequenzen grosse Schaumstoffdicken benötigt werden. Eine Vielzahl einzelner, als Massenware verfügbaren, Schalldämmplatten werden üblicherweise grossflächig, rasterartig nebeneinander angeordnet sowie an der Rückseite - mittels Wandkleber - dauerhaft auf einer Innenraumfläche des zu dämmenden Raumbereiches befestigt. Neben der quadratischen Kachelung sind eine Vielzahl weiterer Mosaiken von identischen oder einer Anzahl verschiedener Grundflächen bekannt, welche zudem optisch ansprechend, in verschiedenen Farben sowie mit Schrift- und Bildmotiven kombiniert ausgebildet sein können. Somit sind derartige Schalldämmplatten neben der Schalldämpfung auch zur Raumgestaltung, als Blickfang, als Werbeträger, als Pinnwand usw. nutzbar. Dazu sind die Schalldämmplatten auf der, dem zu dämpfenden Raumbereich zugewandten, freien Vorderseite vorteilhaft mit dünnem, leichten Stoff kaschiert sowie geeignet in einen Holz-, Kunststoff- oder Metallrahmen eingelegt.

Der Formkörper besteht üblicherweise vollständig aus einem gesundheitlich unbedenklichen, besonders weichen, offenporigen Schaumstoff hoher Elastizität, bspw. Melaminharz, Polyurethan sowie nach der DE10084903B4 aus Polyetherpolyurethan, welcher durch seine offenporige Oberfläche gewährleistet, dass Schallwellen nicht als Hall reflektiert werden sondern ungehindert in die Zellstruktur eindringen können und in dieser, durch einen bei Raumtemperatur hohen Verlustfaktor der dynamischen Viskoelastizität, zumindest in Teilbereichen zwischen 16 Hz und 16 kHz des Hörschalls signifikant gedämpft werden. Da ein derartiger Schaumstoff eine extrem geringe Wärmeleitfähigkeit aufweist, dienen die Schalldämmplatten zudem der Wärmedämmung im Innenraumbereich.

Bei zudem vorbekannten LED-Beleuchtungspanelen sind direkt an der Vorderseite angeordnete Leuchtmittel oder Leuchtschichten vorhanden, die zur Beleuchtung und/oder als Motiv dienen, jedoch auch den Hörschall reflektieren.

Zur Beleuchtung als solches sind geeignete elektrische, mit Niederspannung aus einem geeigneten Netzteil betriebene, stetige Flächenstrahler in Form von organischen Leuchtfolien und Linienstrahler in Form von organischen Leuchtkabeln bekannt, ebenso Leuchtdioden jeder Art (LED) einzeln sowie in Form von quasistetigen LED-Bändern und LED-Arrays. Trotz ihres bekannt hohen Wirkungsgrades wird der Grossteil der zugeführten elektrischen Energie wieder in Form von Wärme abgegeben, wodurch auch diese heiss werden können.

Die Aufgabe der Erfindung besteht in der Realisierung einer weiteren Nutzung von derartigen Schalldämmplatten. Die Aufgabe wird mit den Merkmalen des Anspruchs 1 gelöst. Vorteilhafte Weiterbildungen ergeben sich aus den Unteransprüchen.

Im Wesentlichen sind bei einer Schalldämmplatte zur Dämpfung des Hörschalls im Innenraumbereich zumindest teilweise an den Seitenflächen und/oder an der Rückseite elektrisch gespeiste Leuchtmittel derart angeordnet, dass deren Licht zumindest einen lichtdurchlässigen Formkörper aus (vorteilhaft offenporigen) Schaumstoff durchflutet und zumindest teilweise an der Vorderseite austritt.

Bei der Durchflutung des Schaumstoff-Formkörpers mit Licht wirkt die einzelne Schalldämmplatte zusätzlich als eine Flächenleuchte, welche abhängig von der gewählten Beleuchtungsstärke und Lichtfarbe aktiv zur sichtbaren Raumgestaltung beitragen, die emotional erfahrbare Raumstimmung verändern sowie, bei einer hier angenommenen maximal zulässigen elektrischen Leistung zwischen 20 W und 200 W, zu einer schattenfreien Ausleuchtung beitragen kann.

Vorteilhaft ist das Leuchtmittel mit einer, optional rückseitig angeordneten sowie als Stecksystem ausgebildeten, digitalen Steuerschnittstelle zur Steuerung der Beleuchtungsstärke und/oder Lichtfarbe verbunden, wodurch mehrere im Raster bzw. in Mosaiken angeordnete sowie über einen Steuerbus verbundene Schalldämmplatten - gleichartig oder in vorwählbaren Mustern - als Grossflächenleuchte ansteuerbar sind, insbesondere direkt über das Stromversorgungsnetz von einem Steuerrechner, welcher direkt als Eingabegerät oder indirekt als über ein optional drahtloses Netzwerk gesteuertes Netzwerkgerät vom Nutzer steuerbar ist.

Vorteilhaft ist das Leuchtmittel zumindest teilweise als ein Flächenstrahler ausgebildet, optional als ein quasistetiges LED-Array oder eine stetige Leuchtfolie, welche weiter vorteilhaft im Wesentlichen einseitig strahlt, wodurch insbesondere bei einer zweckdienlichen Anordnung auf oder nahe der Rückseite eine gleichmässige Durchflutung des dünnen vorderen Formkörpers erfolgt.

Vorteilhaft ist das Leuchtmittel zumindest teilweise als Linienstrahler ausgebildet, optional als ein quasistetiges LED-Band oder ein stetiges Leuchtband, welches weiter vorteilhaft im Wesentlichen einseitig strahlt, wodurch insbesondere bei einer zweckdienlichen Anordnung mittig auf oder nahe den Seitenflächen eine randseitige Durchflutung des Formkörpers erfolgt.

Vorteilhaft ist das Leuchtmittel zumindest teilweise als Punktstrahler ausgebildet, optional als genau eine einzelne LED, mehrere LEDs oder mit einer Vielzahl untereinander verschalteter einzelner Punktstrahler in Form eines quasistetigen LED-Bandes oder LED-Arrays, wodurch bei Massenwaren eine ökonomische Realisierung als Mittelpunktstrahler, seitlicher Eckstrahler, seitlicher und/oder rückseitiger Punktrasterstrahler möglich ist.

Vorteilhaft weist der Formkörper im Bereich der Leuchtmittel geeignet geformte Aussparungen auf, vorteilhaft Längsbohrungen oder V-förmige Längsnuten, wodurch trotz randseitiger öder eckseitiger Einstrahlung eine weitgehend gleichmässige Lichtdurchflutung erfolgt.

Vorteilhaft ist rückseitig zumindest des vorderseitigen Formkörpers eine Leuchtschicht aus lichtleitendem Material angeordnet, bspw. aus Glasfaserflies, dünner Plexiglasplatte oder Leuchtfolie, wodurch punktuell oder randseitig eingestrahltes Licht gleichmässig verteilt wird, ohne die Schalldämpfung wesentlich zu beeinträchtigen.

Vorteilhaft ist die optional bedruckte und eingefräste Leuchtschicht mit Löchern durchsetzt, welche weiter vorteilhaft nach Grösse und Position ideal verteilt sind den Lichtstrom homogenisieren, wodurch ein Schalldurchlass zu optional rückseitigen Formkörpern gewährt ist und tieffrequenter Schall durch die grössere Schaumstoffdicke gedämpft wird.

Leuchtmittel geringer Abwärme können direkt oder optional mit einer dünnen metallischen Kühlleiste verklebt auf den Formkörper aufgebracht sowie in Schlitze oder Aussparungen des Formkörpers eingebracht werden, vorteilhaft verklebt, wodurch der Herstellungsaufwand minimal ist.

Vorteilhaft sind die Leuchtmittel auf einem Montagerahmen aus relativ zum Formkörper wärmeleitfähigeren Material wie Metall montiert, wodurch bei Leuchtmitteln höherer Abwärme diese abgeführt und grossflächig über den Montagerahmen verteilt wird. Vorteilhaft weist der Montagerahmen zumindest ein zur Vorderseite hin auskragendes Haftelement auf, dem eine passende haftreibschlüssige Haftöffnung im Formkörper zugeordnet ist, wodurch nach der Montage des Montagerahmens an der Innenraumfläche - der leichte Formkörper nur aufgesteckt werden muss und insbesondere wieder werkzeuglos demontiert bzw. ausgewechselt werden kann. Insbesondere kann ein in der Fläche geschlossen umlaufend ausgebildeter Montagerahmen mit einem vorteilhaft L-förmigen Querschnitt, an welchen sowohl nach innen und/oder nach aussen orientierte Leuchtmittel befestigt sind, mit seinem in der Tiefe nach vorn auskragenden Haftelement in eine umlaufende Haftnut des Formkörpers haftreibschlüssig passend eingreifen. So kann insbesondere der Formkörper einfach erneuert bzw. gegen eine Vielzahl unterschiedlich gestalteter Formkörper ausgewechselt werden.

Vorteilhaft ist der Formkörper mit einem zumindest die Vorderseite und die Seitenflächen umfassenden, optional wechselbaren, optisch durchscheinenden Bezug aus leichten Materialien wie Kunstseide überzogen, wodurch eine passive Grundfarbe sowie allfällige Motive aufbringbar sind, ohne die Schalldämpfung zu mindern.

Die Erfindung wird anhand von vorteilhaften Ausführungsbeispielen näher erläutert. Dabei zeigt die Fig. 1 mit Teilschnitt in Fig. 2 eine Schalldämmplatte in perspektivischer Rückansicht als Explosionsdarstellung. Die Fig. 3 und Fig. 4 zeigen dieserart eine alternative, aussen rahmenlose Schalldämmplatte.

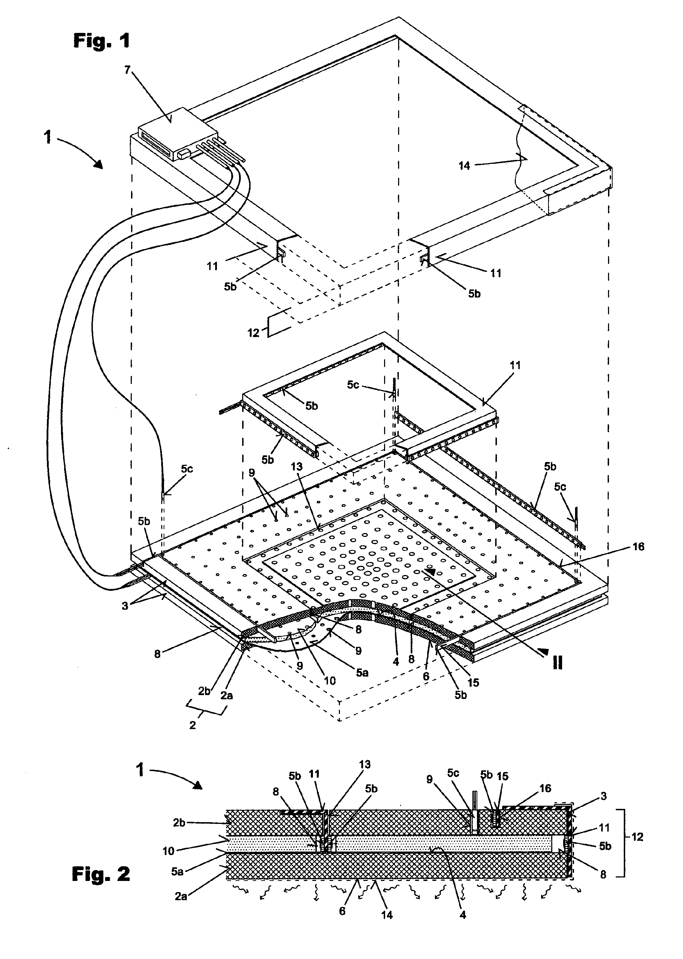

Nach der Fig. 1 und Fig. 2 weist eine prismatische Schalldämmplatte 1 der Grösse 60 cm x 60 cm x 4 cm einen zweiteiligen Formkörper 2 {2a, 2b} aus blickdichtem, transluzentem, lichtdurchlässigem, weissem, offenzelligem, schallabsorbierendem Schaumstoff aus Melaminharz (Basotect V3012 bzw. G+) auf, an dessen Seitenflächen 3 und an dessen Rückseite 4 elektrisch gespeiste Leuchtmittel 5 {5a, 5b, 5c} derart angeordnet sind, dass deren Licht den vorderseitigen Formkörper 2a durchflutet und an der Vorderseite 6 austritt. Die sowohl als LED-Flächenstrahler 5a, LED-Linienstrahler 5b und LED-Punktstrahler 5c ausgebildeten Leuchtmittel 5 sind mit einer rückseitig angeordneten digitalen Steuerschnittstelle 7 elektrisch verbunden. An dem vorderseitigen Formkörper 2a ist rückseitig, im Tiefenbereich der als Linienstrahler 5b ausgebildeten Leuchtmittel 5 mit den zugeordneten nutförmigen Aussparungen 8, ein jeweils mit Löchern 9 durchsetzter LED-Flächenstrahler 5a und eine Leuchtschicht 10 aus dünnem, transparentem Plexiglas angeordnet, welcher der rückseitige Formkörper 2b folgt. Das als LED-Linienstrahler 5b ausgebildete Leuchtmittel 5 ist beidseitig auf einem inneren sowie innenseitig auf einem äusseren metallenen, im Querschnitt L-förmigen Montagerahmen 11 montiert, der ein nach vorn auskragendes Haftelement 12 ausbildet, dem jeweils eine passende haftreibschlüssige Haftöffnung 13 im rückseitigen Formkörper 2b zugeordnet ist. Zusätzlich ist ein als quasistetiger LED-Linienstrahler 5b ausgebildetes Leuchtmittel 5 mit einer dünnen metallischen Kühlleiste 15 verklebt und diese wiederum in einen Schlitz 16 des rückseitigen Formkörpers 2b haftreibschlüssig eingebracht. Die Formkörper 2a, 2b sind mit einem, die Vorderseite 6 und die Seitenflächen 3 umfassenden, optisch durchscheinenden Bezug 14 aus Kunstseide überzogen.

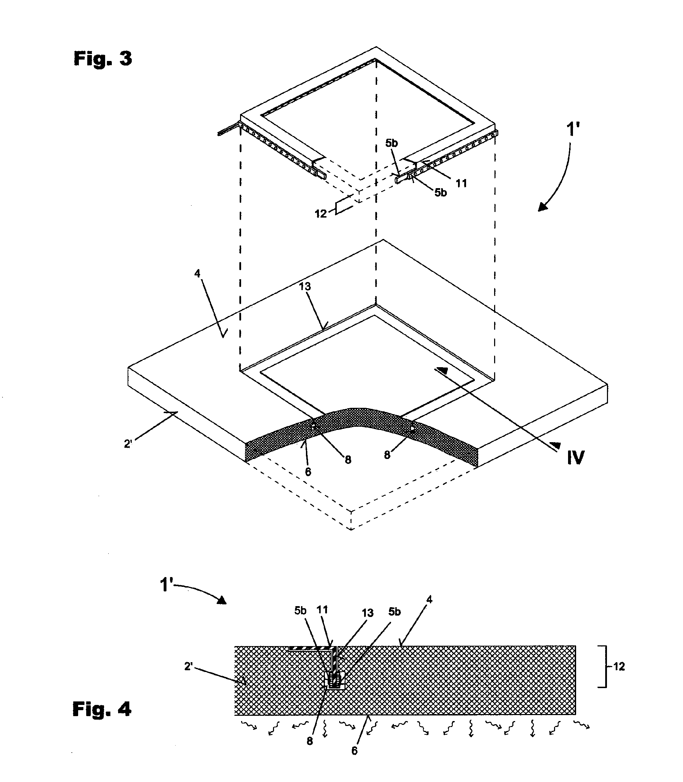

Dazu im Unterschied sind entsprechend der Fig. 3 und Fig. 4 bei einer alternativen Schalldämmplatte 1' nur die als quasistetige LED-Linienstrahler 5b ausgebildeten Leuchtmittel 5 beidseitig an einem inneren Montagerahmen 11 angebracht und an dessen nach vorn auskragendem Haftelement 12 der einteilige Formkörper 2 mittels der Haftöffnung 13 haftreibschlüssig befestigt. Die Haftöffnung 13 weist im Tiefenbereich, den LED-Linienstrahlern 5b zugeordnete, nutförmige Aussparungen 8 auf.

## Patentansprüche

1. Schalldämmplatte zur Dämpfung des Hörschalls im Innenraumbereich mit zumindest einem Formkörper (2, 2a, 2b) aus Schaumstoff, **dadurch gekennzeichnet, dass** zumindest teilweise an den Seitenflächen (3) und/oder an der Rückseite (4) des Formkörpers (2, 2a, 2b) zumindest ein elektrisch gespeistes Leuchtmittel (5, 5a, 5b, 5c) derart angeordnet ist, dass dessen Licht zumindest einen lichtdurchlässigen Formkörper (2, 2a) durchflutet und zumindest teilweise an der Vorderseite (6) austritt.

2. Schalldämmplatte nach Anspruch 1, **dadurch gekennzeichnet, dass** das Leuchtmittel (5, 5a, 5b, 5c) mit einer digitalen Steuerschnittstelle (7) verbunden ist.

3. Schalldämmplatte nach Anspruch 1 oder 2, **dadurch gekennzeichnet, dass** das Leuchtmittel (5, 5a, 5b, 5c) zumindest teilweise als ein Flächenstrahler (5a), Linienstrahler (5b) und/oder Punktstrahler (5c) ausgebildet ist.

4. Schalldämmplatte nach einem der Ansprüche 1 bis 3, **dadurch gekennzeichnet, dass** der Formkörper (2, 2a, 2b) im Bereich des Leuchtmittels (5, 5a, 5b, 5c) Aussparungen (8) aufweist.

5. Schalldämmplatte nach einem der Ansprüche 1 bis 4, **dadurch gekennzeichnet, dass** rückseitig zumindest des vorderseitigen Formkörpers (2, 2a) eine Leuchtschicht (10) aus lichtleitendem Material angeordnet ist.

6. Schalldämmplatte nach Anspruch 5, **dadurch gekennzeichnet, dass** die Leuchtschicht (10) mit Löchern (9) durchsetzt ist.

7. Schalldämmplatte nach einem der Ansprüche 1 bis 6, **dadurch gekennzeichnet, dass** das Leuchtmittel (5, 5a, 5b, 5c), direkt oder mit einer dünnen metallischen Kühlleiste (15) verklebt, mit dem Formkörper (2, 2a, 2b) verbunden ist.

8. Schalldämmplatte nach einem der Ansprüche 1 bis 7, **dadurch gekennzeichnet, dass** das Leuchtmittel (5, 5a, 5b, 5c) auf einem Montagerahmen (11) montiert ist.

9. Schalldämmplatte nach Anspruch 8, **dadurch gekennzeichnet, dass** der Montagerahmen (11) zumindest ein zur Vorderseite hin auskragendes Haftelement (12) aufweist, dem eine passende haftreibschlüssige Haftöffnung (13) im Formkörper (2, 2a, 2b) zugeordnet ist.

10. Schalldämmplatte nach einem der Ansprüche 1 bis 9, **dadurch gekennzeichnet, dass** der Formkörper (2, 2a, 2b) mit einem, zumindest die Vorderseite (6) und die Seitenflächen (3) umfassenden, optisch durchscheinenden Bezug (14) überzogen ist.
